# FASCICULE DE BREVET EUROPEEN

(11) **EP 3 056 401 B1**
(45) Date de publication et mention de la délivrance du brevet: **07.06.2017**
(21) Numéro de dépôt: 15197147.0
(22) Date de dépôt: 09.07.2014
(51) Int. Cl.: B60T 17/16, B61H 13/04

(54) **SYSTÈME DE FREINAGE FERROVIAIRE**
SCHIENENBREMSSYSTEM
RAILWAY BRAKING SYSTEM

(30) Priorité: 17.07.2013 FR 1357024
(43) Date de publication de la demande: 17.08.2016
(62) Demande divisionnaire de: 14176402.7
(73) Titulaire: Faiveley Transport Amiens, 80000 Amiens (FR)
(72) Inventeur: GERBER-PAPIN, Denis, 80830 L'ETOILE (FR); BEAUVOIS, Damien, 80000 AMIENS (FR); GONCALVES, Claudino, 80620 RIBEAUCOURT (FR)
(74) Mandataire: Santarelli

(56) Documents cités:
- EP-A1- 2 154 040
- EP-A1- 2 154 391
- EP-A2- 1 630 444
- US-A- 5 701 974

## Description

L'invention concerne le domaine du freinage des véhicules ferroviaires.

Elle concerne plus particulièrement les systèmes de freinage ferroviaires pour véhicule ferroviaire pourvus d'un frein de service et d'un frein de parking configurés pour agir sur une timonerie de freinage.

Elle concerne également les procédés de freinage de véhicules ferroviaires comportant de tels systèmes de freinage.

Les véhicules ferroviaires sont généralement équipés de cylindres de frein de service comportant un piston mobile sous l'effet d'un fluide sous pression, le déplacement de ce piston entraînant une action de freinage telle que le serrage d'un disque de frein entre deux garnitures, ou la pression directe d'une semelle contre une roue du véhicule.

Ces cylindres de frein comportent également généralement un actionneur de parking ou de secours qui est activé en cas de perte de pression du fluide sous pression et/ou en cas de vidange volontaire ou de fuite du système pneumatique. Cet actionneur, appelé aussi frein de parking, permet d'assurer le freinage grâce à la force d'un ressort se substituant à la force du fluide. Une fois ce frein de parking activé, le frein reste serré en permanence. Le document US 570 19 74 A1 décrit un dispositif contrôle de freinage pour des véhicules ferroviaires, avec contrôle de blocage de frein de parking pneumatique. On connaît de la demande de brevet européen EP 2 154 040 un système de freinage ferroviaire pourvu d'un actionneur de frein de parking accouplé à un cylindre de frein de service ferroviaire. Ce cylindre de frein comporte un corps et un piston mobile par rapport au corps pour agir sur la timonerie de freinage par l'intermédiaire d'une tige de poussée.

Le cylindre de frein comporte également une chambre de pression délimitée par le piston et par le corps et qui est raccordée par un conduit à une source d'agent de pression pneumatique pour mettre le piston dans une position de freinage de service.

Le frein de parking comporte quant à lui un corps distinct du corps du cylindre de frein. Le corps du frein de parking présente une ouverture en vis-à-vis du piston du cylindre de frein de service, laquelle ouverture reçoit à coulissement un manchon de poussée s'ajustant dans cette ouverture de manière étanche.

Le frein de parking comporte également un piston monté mobile dans un cylindre solidaire du corps et délimitant avec le corps une chambre de pression de frein de parking. Cette chambre de pression de frein de parking est raccordée à une autre source d'agent de pression pneumatique via un conduit. Le piston comporte en son centre un orifice traversé par le manchon de poussée.

Le frein de parking comporte en outre des ressorts qui sollicitent en permanence le piston de ce frein de parking vers une position dite basse où le frein de parking est considéré comme étant dans une configuration de travail.

Pour actionner le frein de parking lorsque le piston du cylindre de frein de service est en position de freinage de service, la chambre de pression du frein de parking (préalablement remplie avec l'agent de pression pneumatique) est vidangée et les ressorts du frein de parking agissent alors sur le piston du frein de parking, lequel entraîne le manchon jusqu'à ce que ce dernier vienne en appui contre le piston du cylindre de frein de service.

La chambre de pression du cylindre de frein de service peut alors être vidangée puisque le frein de parking est actionné.

La force appliquée par le frein de parking sur le piston de frein de service est directement fonction de la force développée par les ressorts. Cette force est fonction bien entendu de la raideur et de l'allongement de ces ressorts.

Avec ce système de freinage, l'effort appliqué par le piston du cylindre de frein de service lorsque le frein de parking est actionné et le cylindre de frein de service est vidangé sur la timonerie de freinage est souvent inférieur à l'effort appliqué par ce même piston lorsqu'il est en position de freinage de service.

L'invention concerne un système de freinage pour véhicule ferroviaire, présentant des performances améliorées par rapport aux systèmes de freinage de l'art antérieur susmentionnés, tout en étant simple, commode et économique.

L'invention a ainsi pour objet, sous un premier aspect, un système de freinage ferroviaire pour véhicule ferroviaire à freins à au moins une garniture ou à au moins une semelle, comportant :
- un corps ;
- une timonerie de freinage configurée pour agir sur au moins un dit frein à au moins une garniture ou à au moins une semelle ;
- un frein de service comportant un piston de freinage mobile par rapport audit corps pour agir sur ladite timonerie de freinage et délimitant avec ledit corps une chambre de pression de frein de service configurée pour être alimentée par une première source d'agent de pression pneumatique pour mettre ledit piston de freinage dans une position de freinage de service ; et
- un frein de parking configuré pour agir sur ledit piston de freinage dudit frein de service et admettant une configuration de travail et une configuration de repos ;
ledit système de freinage ferroviaire étant caractérisé en ce que :
- ledit piston de freinage est disposé dans ledit corps et présente deux côtés, respectivement un premier côté configuré pour agir sur ladite timonerie de freinage et un second côté opposé audit premier côté et tourné vers la dite chambre de pression de frein de service ;
- ledit frein de service comporte en outre une tige de piston disposée dans ladite chambre de pression de frein de service et fixée sur ledit second côté dudit piston de freinage ;
- ledit frein de parking est disposé dans ledit corps et comporte un dispositif de blocage disposé dans ladite chambre de pression de frein de service, mobile par rapport audit corps pour agir sur ladite tige de piston et admettant une première position et une seconde position, ainsi qu'un dispositif de commande mobile par rapport audit corps, configuré pour être actionné électriquement et admettant une position stable ;
avec ledit dispositif de blocage et ledit dispositif de commande qui sont configurés pour que :
- lorsque ledit piston de freinage est dans sa position de freinage de service et que ledit frein de parking est en configuration de travail, ledit dispositif de commande agit sur ledit dispositif de blocage jusqu'à ce que ce dernier immobilise ladite tige de piston de sorte à bloquer ledit piston de freinage dans sa position de freinage de service, ledit dispositif de blocage étant alors dans sa seconde position et ledit dispositif de commande dans sa positon stable ; et
- lorsque ledit frein de parking est en configuration de repos, ledit dispositif de commande agit sur ledit dispositif de blocage jusqu'à ce que ce dernier libère ladite tige de piston de sorte à débloquer ledit piston de freinage de sa position de freinage de service, ledit dispositif de blocage étant ainsi dans sa première position ;
grâce à quoi l'effort de freinage appliqué sur ladite timonerie de freinage lorsque ledit frein de parking est en configuration de travail est directement fonction de l'effort de freinage appliqué sur ladite timonerie de freinage par ledit frein de service dans sa position de freinage de service, indépendamment de l'effort appliqué par ledit dispositif de blocage sur ladite tige de piston.

Dans le système de freinage selon l'invention, le piston de freinage est immobilisé en position de freinage de service par le frein de parking et en particulier par son dispositif de blocage. Cela signifie que le piston de freinage peut être immobilisé dans n'importe quelle position, laquelle position est liée à la course que ce piston a parcourue et cette course dépend de l'effort appliqué lors de la phase de freinage de service.

On entend par le terme immobiliser le fait que l'effort appliqué par le piston de freinage sur la timonerie de freinage dans la configuration de travail du frein de parking ne diminue pas, ou presque pas.

On admet tout de même une certaine perte liée au recul du piston de freinage, en particulier au léger déplacement du piston par rapport au dispositif de blocage, au moment où la chambre de pression de frein de service est vidangée. Cette perte est maîtrisée et se définit par une très légère diminution de l'effort appliqué qui est due notamment aux tolérances de fabrication à la fois du dispositif de blocage et du piston de freinage. Cette diminution de l'effort appliqué sur la timonerie de freinage est ici appelée pertes au recul. Une valeur acceptable de ces pertes au recul est au maximum de l'ordre de 10% de l'effort appliqué par le frein de service à l'instant où le frein de parking est actionné pour être en configuration de travail.

Grâce à l'invention et en particulier à la configuration du piston de freinage et du frein de parking, on s'affranchit notamment des ressorts des systèmes de freinage connus décrits ci-dessus qui permettent d'appliquer l'effort de frein de parking sur la timonerie de freinage par l'intermédiaire du piston du cylindre de frein de service. Ainsi, pour un même effort appliqué sur la timonerie de freinage lorsque le frein de parking est en configuration de travail, le système de freinage selon l'invention est plus compact que les systèmes de freinage de l'art antérieur susmentionnés, et également plus léger.

On notera que la timonerie de freinage présente avantageusement des bras déformables dont l'élasticité peut se substituer à celle des ressorts des systèmes de freinage connus décrits ci-dessus.

On notera que la configuration du frein de parking est choisie de telle sorte que la force appliquée directement par le dispositif de blocage pour immobiliser le piston de freinage n'est pas supérieure à la force appliquée par les ressorts sur le piston des systèmes de freinage de l'art antérieur susmentionnés ; alors que l'effort appliqué sur la timonerie de freinage lorsque le frein de parking du système selon l'invention est en configuration de travail est au moins égal voire supérieur à celui procuré par les systèmes de freinage de l'art antérieur susmentionnés.

On notera également que l'agencement du frein dans le corps du système, et en particulier l'agencement du dispositif de blocage dans la chambre de pression de frein de service, permet de le protéger de l'environnement du corps et une lubrification simple et commode.

Selon des caractéristiques préférées, simples, commodes et économiques du système selon l'invention :
- ledit dispositif de commande est formé par un actionneur électrique ;
- ledit dispositif de blocage est disposé dans une cavité dudit corps;
- ledit dispositif de blocage est formé par un doigt de blocage et ledit dispositif de commande est formé par un actionneur électrique mobile par rapport audit corps et par un élément ressort ; avec ledit actionneur électrique qui est configuré pour maintenir ledit doigt de blocage dans sa première position lorsque ledit actionneur électrique est alimenté électriquement, première position dans laquelle ledit doigt de blocage est à distance de ladite tige de piston ; et avec ledit actionneur électrique qui est configuré pour maintenir ledit doigt de blocage dans sa seconde position lorsque ledit actionneur électrique n'est pas alimenté électriquement, deuxième position dans laquelle ledit doigt de blocage immobilise ladite tige de piston ;
- ledit dispositif de blocage est formé par un doigt de blocage et ledit dispositif de commande est formé par un actionneur électrique mobile par rapport audit corps ; ledit actionneur étant configuré pour maintenir ledit doigt de blocage dans sa première position lorsque ledit actionneur électrique est alimenté électriquement, première position dans laquelle ledit doigt de blocage est à distance de ladite tige de piston ; ledit actionneur étant en outre configuré pour maintenir ledit doigt de blocage dans sa seconde position lorsque ledit actionneur électrique n'est pas alimenté électriquement, deuxième position dans laquelle ledit doigt de blocage immobilise ladite tige de piston ;
- ledit élément ressort est disposé dans une cavité dudit corps ;
- ledit frein de parking comporte en outre un levier intermédiaire de commande attaché à la fois audit dispositif de blocage et audit dispositif de commande et configuré pour actionner ledit dispositif de blocage en réponse au déplacement dudit dispositif de commande ;
- ledit dispositif de blocage présente à son extrémité distale une dent à au moins un bord incliné configurée pour coopérer de manière complémentaire avec une denture complémentaire à au moins un bord incliné
   de ladite tige de piston ou d'une pièce intermédiaire disposée entre ladite tige de piston et ledit dispositif de blocage ;
- ledit dispositif de blocage présente à son extrémité distale une dent à bords droits configurée pour coopérer de manière complémentaire avec une denture complémentaire à bords droits de ladite tige de piston ou d'une pièce intermédiaire disposée entre ladite tige de piston et ledit dispositif de blocage ;
- ledit frein de service comporte en outre une roue à rochet montée sur ladite tige de piston et configurée pour engrener avec ledit dispositif de blocage lorsque ce dernier est dans sa seconde position, afin d'immobiliser ladite tige de piston ;
- ledit frein de parking comporte en outre une pièce de déverrouillage manuel dudit frein de parking lorsque ce dernier est en configuration de travail, laquelle pièce de déverrouillage est configurée pour agir sur ledit dispositif de blocage ; et/ou
- ladite pièce de déverrouillage est configurée pour être actionnée électriquement.

On va maintenant poursuivre l'exposé de l'invention par la description d'exemples de réalisation, donnée ci-après à titre illustratif et non limitatif, en référence aux dessins annexés sur lesquels :
- les figures 1 à 5 illustrent schématiquement le fonctionnement d'un système de freinage ferroviaire conforme à l'invention, lequel système est pourvu d'un distributeur pneumatique et est connecté à différentes sources d'agent de pression pneumatique du véhicule, ce système étant respectivement dans différentes configurations ;
- la figure 6 est une vue en perspective éclatée d'une première variante de réalisation du système de freinage ferroviaire ;
- la figure 7 est une vue schématique, en coupe, du système de freinage ferroviaire illustré sur la figure 6, ici assemblé ;
- les figures 8 et 9 sont des vues partielles du système de freinage ferroviaire illustré sur les figures 6 et 7, respectivement dans une configuration de travail et dans une configuration de réarmement et/ou de déverrouillage d'un frein de parking de ce système, avec en outre un agrandissement d'un détail en bas à droite de chaque figure ;
- les figures 10 et 11 illustrent de manière schématique respectivement des deuxième et troisième variantes de réalisation du système de freinage ferroviaire illustré sur les figures 1 à 5, dans la configuration de travail du frein de parking que ce système comporte ; et
- les figures 12 à 15 sont des vues partielles et schématiques d'une quatrième variante de réalisation du système de freinage ferroviaire illustré sur les figures 1 à 5, dans différentes configurations.

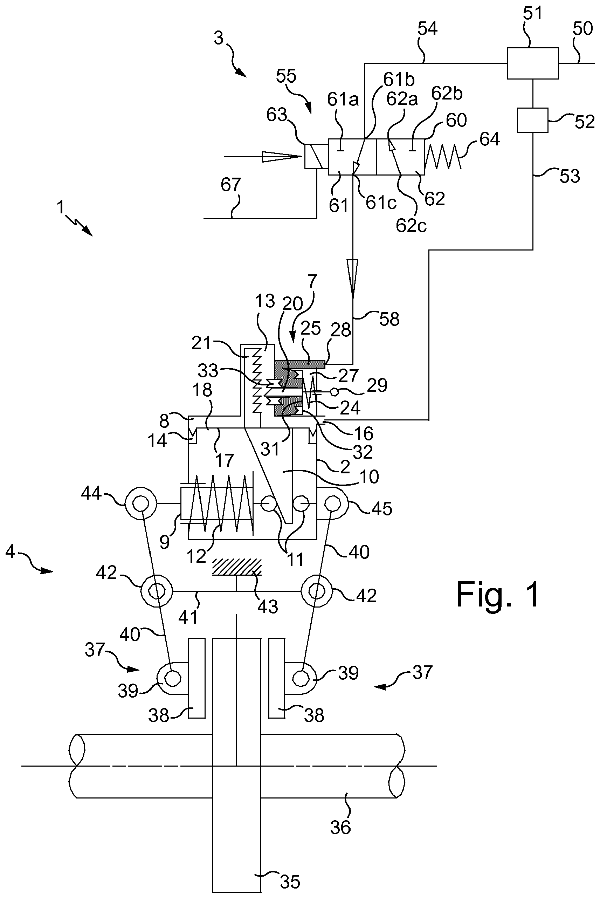

La figure 1 représente schématiquement un système de freinage ferroviaire 1 pour un véhicule ferroviaire à frein à garnitures ou à semelles.

Le système de freinage ferroviaire 1 comporte un corps 2 formant ici un cylindre à la fois de frein de service 6 et de frein de parking 7, un réseau de cheminement de conduites pneumatiques 3 connecté au corps 2, une timonerie de freinage 4 reliée mécaniquement au corps 2 ainsi qu'un frein 5 à garnitures sur lequel la timonerie de freinage 4 est configurée pour agir.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés respectivement un premier côté 17 configuré pour agir sur la timonerie de freinage 4 par l'intermédiaire de la tige de poussée 9 et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14 disposée entre ce piston de freinage 8 et des bords intérieurs du corps 2.

Le frein de service 6 comporte en outre une pièce de coin 10 fixée sur le premier côté 17 du piston de freinage 8.

Cette pièce de coin 10 présente une section triangulaire et est configurée pour coopérer avec un jeu de butées à roulements 11, dont l'une des butées à roulements est reliée au corps 2 tandis que l'autre des butées à roulements est reliée à la tige de poussée 9.

Cette tige de poussé 9 est pourvue d'un régleur d'usure configuré pour compenser l'usure des garnitures du frein 5 afin d'éviter qu'un jeu trop important (consécutif à l'usure des garnitures) ne réduise l'effort de freinage.

Le frein de service 6 comporte en outre un ressort 12 ici disposé autour de la tige de poussée 9, entre la butée à roulements qui est reliée à cette dernière et le bord intérieur du corps 2. Ce ressort 12 est configuré pour rappeler la butée qui est reliée à la tige de poussée 9 contre la pièce de coin 10.

Le frein de service 6 comporte en outre un premier orifice 15 ménagé dans le corps 2 et configuré pour autoriser le déplacement de la tige de poussée 9 au travers de ce premier orifice 15.

Le frein de service 6 comporte en outre un deuxième orifice 16 ménagé dans le corps 2 et débouchant dans la chambre de pression de frein de service 13.

Cette chambre de pression de frein de service 13 est raccordée par une conduite de frein principale 53, dite aussi conduite de frein de service, connectée au niveau de ce deuxième orifice 16 à une source de fluide sous pression tel que, par exemple, un circuit pneumatique.

Le corps 2 comporte une cavité 27 accolée à la chambre de pression de frein de service 13 et dans laquelle est disposé le frein de parking 7.

Le frein de parking 7 comporte un dispositif de blocage formé ici par un doigt de blocage 20 mobile par rapport au corps 2 et s'étendant suivant la deuxième direction axiale.

Le frein de parking 7 comporte en outre un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et un second côté 32 opposé au premier côté 31 et tourné vers la chambre de pression de frein de parking 25.

Le frein de parking 7 comporte en outre un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

On notera que le piston de maintien 23 et que l'élément ressort 24 forment un dispositif de commande mobile du frein de parking 7.

Le piston de maintien 23 est configuré pour se déplacer dans le corps 2 tout en maintenant la chambre de pression de frein de parking 25 relativement étanche grâce à une membrane (non représentée) disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

On notera que l'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte en outre un quatrième orifice 28 ménagé dans le corps 2 et débouchant dans la chambre de pression de frein de parking 25.

On notera d'ailleurs que cette chambre de pression de frein de parking 25 est raccordée par une conduite de frein de parking 58 connectée au niveau de ce quatrième orifice 28 à une source de fluide sous pression, tel que par exemple un circuit pneumatique.

Le frein de parking 7 comporte en outre une pièce de déverrouillage 29 rattachée sur le deuxième côté 32 du piston de maintien 23 et débouchant à l'extérieur du corps 2 au travers d'un cinquième orifice (non représenté) ménagé dans ce corps 2 et débouchant dans la cavité 27 ; de sorte que cette pièce de déverrouillage 29 est accessible pour être manipulée depuis l'extérieur du corps 2.

Le frein de service 6 est disposé dans le corps 2 et est configuré pour agir sur le frein 5 par l'intermédiaire de la timonerie de freinage 4.

Ce frein 5 comporte un disque de frein 35 (ici vu de dessus) monté par exemple sur un essieu 36 de véhicule ferroviaire, ou directement sur la roue à freiner.

Ce frein 5 comporte en outre deux patins 37 pourvus chacun d'une garniture 38 configurées pour être appliquée au contact du disque 35 pour réduire sa vitesse de rotation et par conséquent celle de la roue à freiner, ainsi que d'un oeillet de fixation 39 ménagé à l'opposé de la surface de la garniture 38 configurée pour venir s'appliquer sur le disque de frein 35.

La timonerie de freinage 4 comporte deux leviers déformables 40 pourvus chacun d'un bras supérieur et d'un bras inférieur qui sont solidaires.

Chaque bras des leviers 40 est articulé sur un connecteur central 41 par l'intermédiaire de deux pivots 42.

Le bras inférieur de chaque levier déformable 40 est relié à l'un des patins 37 par l'intermédiaire de son oeillet de fixation 39.

Le bras supérieur de chaque levier déformable 40 est quant à lui relié à une articulation respective 44, 45.

La timonerie de freinage 4 reçoit le corps 2 entre les bras supérieurs des leviers déformables 40, au niveau des articulations 45 et 46.

Le corps 2 est monté à rotation sur l'articulation 44 qui est solidaire d'une extrémité de la tige de poussée 9 tandis qu'il est monté fixe sur l'articulation 45, laquelle est directement solidaire de ce corps 2.

La timonerie de freinage 4 comporte également une patte de fixation 43 solidaire du connecteur central 41 pour le montage de cette timonerie de freinage 4 sur le véhicule ferroviaire ; afin que les patins de freinage 37 soient situés de part et d'autre du disque de frein 35 (ou de la roue du véhicule ferroviaire).

On notera que le rapprochement des articulations 44 et 45 permet d'écarter les patins 37 l'un de l'autre et qu'à l'inverse, l'éloignement de ces articulations 44 et 45 permet de serrer les patins 37 sur le disque de frein 35 (ou sur la roue du véhicule ferroviaire).

Le réseau de cheminement de conduites pneumatiques 3 comporte un circuit pneumatique principal formée d'une conduite principale 50 qui est configurée pour cheminer le long du véhicule ferroviaire.

Ce réseau 3 comporte en outre un réservoir auxiliaire 51 connecté à la conduite principale 50.

On notera qu'un tel réservoir auxiliaire 51 est généralement présent sur chaque bogie du véhicule ferroviaire.

La conduite principale 50 est configurée pour acheminer un fluide sous une première pression prédéterminée, par exemple sensiblement égale à environ 5,5bars. Le réservoir auxiliaire 51 comporte donc un fluide à une telle première pression prédéterminée.

Le réseau 3 comporte, en sortie du réservoir auxiliaire 51 (la conduite principale 50 étant connectée en entrée de ce réservoir auxiliaire 51), deux circuits pneumatiques distincts appelés aussi première source d'agent de pression pneumatique et deuxième source d'agent de pression pneumatique, chacune étant configurée pour alimenter le frein de service 6 et/ou le frein de parking 7.

La première source d'agent de pression pneumatique est formée par un régulateur de pression 52 (ici un détendeur) disposé en sortie du réservoir auxiliaire 51 et configuré pour limiter la pression du fluide circulant dans cette première source d'agent de pression pneumatique à une seconde pression déterminée, par exemple sensiblement égale à environ 3,8bars.

Cette première source d'agent de pression pneumatique comporte en outre la conduite de frein principale 53 (mentionnée plus haut) connectée au limiteur de pression 52 et configurée pour acheminer du fluide sous la deuxième pression prédéterminée, laquelle conduite est connectée au deuxième orifice 16 du frein de service 6 pour alimenter la chambre de pression de frein de service 13.

La deuxième source d'agent de pression pneumatique est formée quant à elle d'une conduite de frein secondaire 54 connectée directement en sortie du réservoir auxiliaire 51, d'une conduite de frein de parking 58 connectée au quatrième orifice 28 du frein de parking 7 qui débouche dans la chambre de pression de frein de parking 25 pour alimenter pneumatiquement cette dernière.

Le réseau 3 comporte également un distributeur 55 ici à trois orifices et deux positions, et monostable, lequel est interposé entre la conduite de frein secondaire 54 et la conduite de frein de parking 58, avec chacune de ses conduites 54, 58 qui est connectée à ce distributeur 55.

Ce distributeur 55 comporte un tiroir 60 mobile et un actionneur 63 qui est configuré pour déplacer ce tiroir 60.

Cet actionneur 63 est configuré pour recevoir un signal de commande 67, par exemple pneumatique.

Ce distributeur 55 comporte également un ressort de rappel 64 configuré pour déplacer le tiroir 60 d'une première position vers une deuxième position.

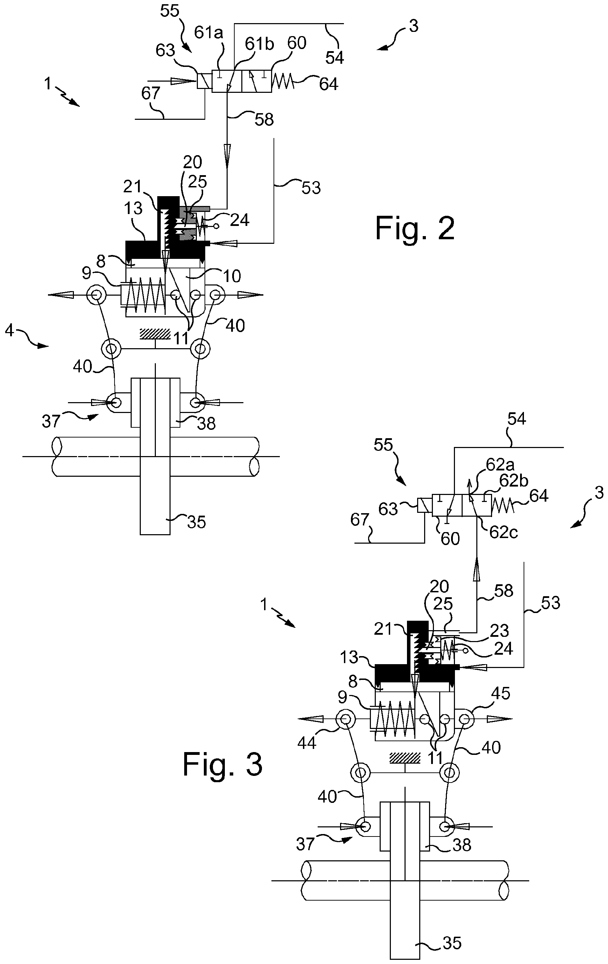

On notera que sur les figures 1 et 2, le distributeur 55 est représenté dans sa première position, laquelle première position n'est pas sa position par défaut.

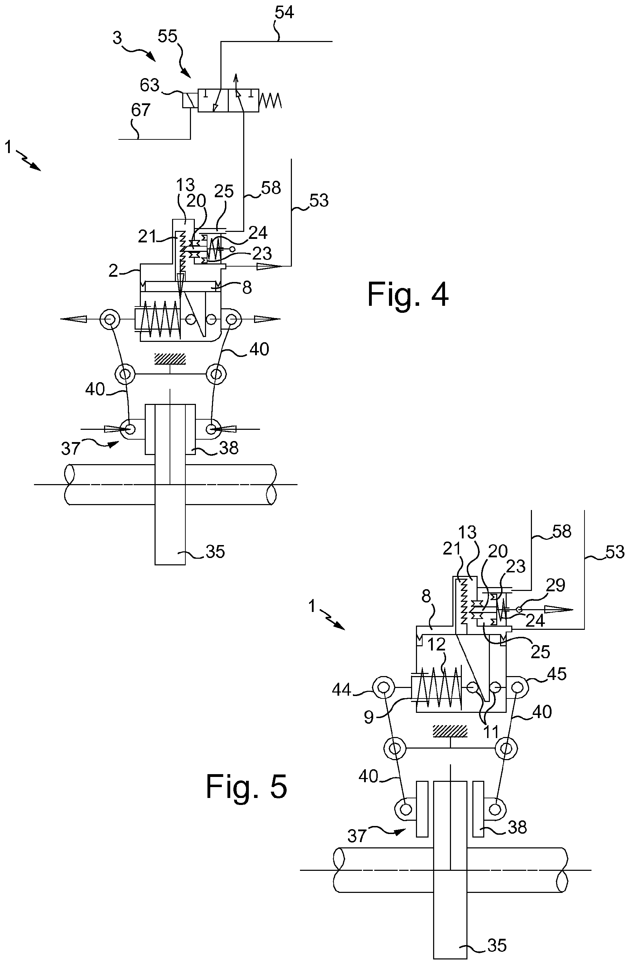

Autrement dit, l'actionneur 63 du distributeur 55 est configuré pour recevoir un signal pneumatique non nul ou au moins suffisant pour déplacer le tiroir 60 entre sa deuxième position (position par défaut appelée aussi « normalement fermée » illustrée sur les figures 3 et 4) et sa première position (illustrée sur les figures 1 et 2).

On notera que le tiroir 60 comporte une première chambre 61 pourvue de trois entrées/sorties 61 a-c et d'une deuxième chambre 62 pourvue également de quatre entrées/sorties 62a-c.

Dans chacune des première et deuxième positions du tiroir 60, la conduite de frein secondaire 54 et la conduite de frein de parking 58 sont chacune reliées à une des trois entrées/sorties 61 a-c et 62a-c.

On va maintenant décrire le fonctionnement du système de freinage ferroviaire 1 en référence aux figures 1 à 5, qui illustrent schématiquement différentes configurations de ce système 1.

Sur la figure 1, le système de freinage ferroviaire 1 est dans une configuration de réarmement.

Dans cette configuration de réarmement, la chambre de pression de frein de service 13 n'est pas alimentée (elle est vidangée) de sorte que le piston de freinage 8 est dans une position de repos, dans laquelle il n'applique pas d'effort de freinage sur la tige de poussée 9.

Par conséquent, les articulations 44 et 45 de la timonerie de freinage 4 sont à une distance l'une de l'autre qui permet de maintenir à distance les patins 37 du disque de frein 35.

La chambre de pression de frein de parking 25 est quant à elle alimentée par la conduite de frein de parking 58, laquelle est connectée via le distributeur 55 à la conduite secondaire de frein 54, elle-même étant directement connectée au réservoir auxiliaire 51.

La chambre de pression de frein de parking 25 est donc sous pression de sorte que le piston de maintien 23 se trouve dans une première position dans laquelle l'élément ressort 24 est comprimé et le doigt de blocage 20 dans une première position à distance de la tige crantée 21 du frein de service 6.

Dans cette configuration de réarmement du système 1, le frein de parking 7 est dans une configuration réarmée tandis que le frein de service 6 est dans une configuration de repos.

En outre, le tiroir 60 du distributeur 55 se trouve dans sa première position qui indique que l'actionneur 63 a reçu un signal de commande 67 (non nul) et donc que le tiroir 60 a été déplacé de sa deuxième position (position par défaut) à sa première position à l'encontre du ressort de rappel 64, lequel est comprimé.

Dans cette première position du tiroir 60, la première chambre 61 présente une première entrée d'alimentation 61 b connectée au réservoir auxiliaire 51 par l'intermédiaire de la conduite de frein secondaire 54, une première sortie de frein de parking 61 c en communication fluidique avec la première entrée d'alimentation 61 b et connectée à la chambre de pression de frein de parking 25 par l'intermédiaire de la conduite de frein de parking 58.

En outre, la première chambre 61 présente un premier orifice bloqué 61 a non connecté et configuré pour interdire le passage de fluide si la conduite de frein secondaire 54 y était raccordée.

Aucune des entrée et sortie de la deuxième chambre 62 du tiroir 60 n'est connectée.

On notera que le frein de parking 7 est dimensionné et configuré de sorte que la pression de réarment du frein de parking 7 est relativement faible, par exemple de l'ordre de 2bar à 6bars.

Sur la figure 2, le système de freinage ferroviaire 1 est représenté dans une configuration d'application du frein de service 6.

Dans cette configuration d'application du frein de service 6, la chambre de pression de frein de service 13 est alimentée par la conduite de frein principale 53.

La chambre de pression de frein de service 13 est donc sous pression et le piston de freinage 8 a été déplacé dans la première direction axiale de sa première position vers une deuxième position dans laquelle la pièce de coin 10 a écarté le jeu de butées à roulements 11, déplaçant ainsi la tige de poussée 9 et l'articulation 44.

Par conséquent, les articulations 44 et 45 s'éloignent l'une de l'autre et provoquent le rapprochement des patins 37 et donc l'application des garnitures 38 contre le disque de frein 35.

On notera que dans la configuration d'application du frein de service 6 du système 1, les leviers 40 sont déformés (élastiquement).

On notera également que dans cette configuration illustrée sur la figure 2, la chambre de pression de frein de parking 25 est toujours sous pression comme mentionné en référence à la figure 1.

Dans cette configuration d'application du frein de service 6 du système 1, le frein de parking 7 est toujours dans sa configuration réarmée tandis que le frein de service 6 est dans une configuration de travail.

La position du tiroir 60 des distributeurs 55 est donc similaire à celle illustrée sur la figure 1.

On notera également que dans la configuration illustrée sur la figure 2, la première pression prédéterminée du fluide injecté dans la chambre de pression de frein de service 13 déplace le piston de freinage 8 d'une course prédéterminée afin d'agir sur la timonerie de freinage 4 avec une première force prédéterminée et par conséquent appliquer un premier effort prédéterminé sur le disque de frein 35.

Sur la figure 3, le système de freinage ferroviaire 2 est représenté dans une configuration de verrouillage dans laquelle le piston de freinage 8 du frein de service 6 est immobilisé dans sa deuxième position illustrée sur la figure 2.

On notera que la timonerie de freinage 4 est ici dans la même position que celle illustré dans la figure 2.

La chambre de pression de frein de service 13 est quant à elle toujours sous pression tandis que la chambre de pression de frein de parking 25 est vidangée.

La vidange de la chambre de pression de frein de parking 25 libère l'élément ressort 24, qui déplace le piston de maintien 23 de sa première position vers une deuxième position dite position stable et ainsi déplace le doigt de blocage 20 de sa première position à une deuxième position dans laquelle il vient immobiliser la tige crantée 21 par engrainement de l'extrémité distale de ce doigt de blocage 20 avec des crans ménagés sur la tige crantée 21.

Pour effectuer la vidange de la chambre de pression de frein de parking 25, l'actionneur 63 du distributeur 55 a reçu un signal de commande 67 différent, ici par exemple nul, de sorte que le tiroir 60 est passé de sa première position à sa deuxième position sous l'action du ressort de rappel 64.

Dans cette deuxième position du tiroir 60, la deuxième chambre 62 de ce tiroir 60 présente une deuxième sortie de frein de parking 62c connectée à la chambre de pression de frein de parking 25 par l'intermédiaire de la conduite de frein de parking 58 et une première sortie d'échappement 62a en communication fluidique avec la deuxième sortie de frein de parking 62c et débouchant à l'atmosphère.

En outre, la deuxième chambre 62 présente un deuxième orifice bloqué 62b non connecté.

Dans cette configuration de verrouillage du système1, le frein de parking 7 et le frein de service 6 sont chacun dans une configuration de travail.

Sur la figure 4, le système de freinage ferroviaire 2 est représenté dans une configuration de vidange du frein de service 6.

La vidange de la chambre de pression de frein de service 13 s'effectue par l'intermédiaire des fuites dans le réseau 3. Autrement dit, ni la chambre de pression de service 13, ni la conduite de frein secondaire 54 et ni la conduite de frein principale 53 ne sont directement mises à l'atmosphère.

On notera que le fluide sous pression présent dans la chambre de pression de frein de service 13 s'échappe de cette dernière notamment depuis la conduite de frein principale 53.

On notera que dans cette configuration de vidange du frein de service 7 du système 1, le distributeur 55 a son tiroir 60 dans sa deuxième position.

On notera également que, grâce au frein de parking 6 et en particulier à l'ensemble doigt de blocage 20 - piston de maintien 23 - élément ressort 24, en combinaison avec la tige crantée 21 fixée au piston de freinage 8 du frein de service 6, ce piston de freinage 8 reste dans sa deuxième position où il agit sur la timonerie de freinage 4 pour appliquer l'effort prédéterminé sur le disque de frein 35 par l'intermédiaire des patins 37, malgré la vidange de la chambre de pression de frein de service 13.

Dans cette configuration de vidange du frein de service 6, le frein de parking 7 est dans une configuration de travail tandis que le frein de service 6 est bloqué dans sa configuration de travail, malgré la vidange de la chambre de pression de frein de service 13.

Sur la figure 5, le système de freinage ferroviaire 1 est représenté dans une configuration de déverrouillage.

Dans cette configuration de déverrouillage, un effort a été appliqué sur la pièce de déverrouillage 29 du frein de parking 6 de sorte à tirer cette pièce déverrouillage 29 vers l'extérieur du corps 2.

Le déplacement de cette pièce de déverrouillage 29 entraine le piston de maintien 23 et par conséquent le doigt de blocage 20 à l'encontre de l'élément ressort 24 qui se trouve ainsi comprimé.

Lorsque le doigt de blocage 20 atteint sa deuxième position, ce dernier ne coopère plus avec la tige crantée 21, qui est ainsi libre.

Par conséquent, le ressort 12 disposé autour de la tige de poussée 9 et entre le bord intérieur du corps 2 et la butée à roulements fixée sur la tige de poussée 9 retrouve sa position initiale.

Ce ressort 12 entraine donc la butée à roulements 11 disposée entre la tige de poussée 9 et la pièce de coin 10 selon la deuxième direction axiale, entrainant ainsi le retour du piston de freinage 8 selon la première direction axiale, jusqu'à sa position de repos.

Les articulations 44 et 45 de la timonerie de freinage sont rapprochées l'une de l'autre de sorte que les leviers déformables 40 retrouvent leurs positions initiales illustrées sur la figure 1 et les patins 37 se retrouvent à distance du disque de frein 35, lequel est ainsi libre en rotation (le disque de frein 35 n'est plus freiné).

Dans cette configuration de déverrouillage, le frein de parking 7 est dans une configuration de déverrouillage tandis que le frein de service 6 est dans une configuration de repos.

Dans la configuration de déverrouillage du système 1, on notera que le distributeur 55 est par exemple dans la même configuration que celle illustrée sur la figure 4, avec les chambres de frein de service 13 et de parking 25 qui sont vidangées.

On notera que le frein de parking 6 est configuré de sorte que l'effort à appliquer pour le déverrouillage, par l'intermédiaire de la pièce de déverrouillage 29, soit relativement faible pour être effectué manuellement par un utilisateur tel que le conducteur du véhicule ferroviaire. Par exemple cet effort est de l'ordre d'environ 10 à 50 daN.

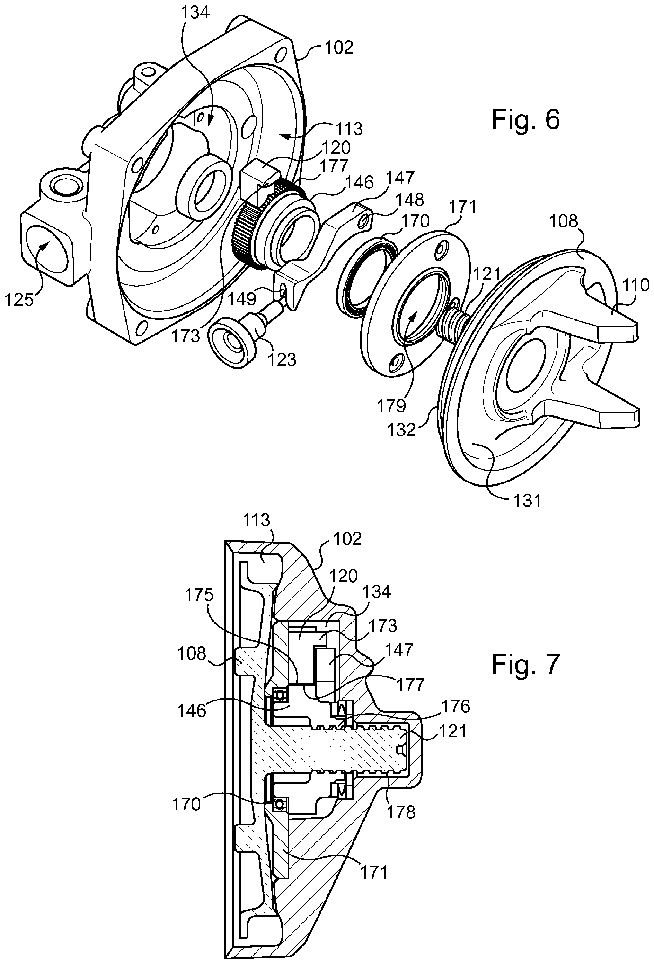

Les figures 6 à 9 illustrent schématiquement et partiellement une première variante de réalisation du système de freinage ferroviaire illustré sur les figures 1 à 5, et en particulier l'ensemble formée du corps et des freins de parking et de service montés dans ce corps.

D'une manière générale on a employé pour les éléments similaires les mêmes références mais additionnées du nombre 100.

Le corps 102 présente ici la forme d'une enveloppe globalement parallélépipédique et fermée, pourvue d'une cavité centrale cylindrique divisée en deux espaces formant respectivement la chambre de pression de frein de service 113 et une cavité secondaire 134, et d'une cavité latérale cylindrique où est formée la chambre de pression de frein de parking 125.

Le frein de service comporte ici un piston de frein de service 108 mobile par rapport au corps 102 formé par exemple d'un seul tenant à la fois avec la pièce de coin 110 qui saille du premier côté 131 de ce piston 108 et avec la tige de piston 121 qui saille du second côté 132 de ce piston 108 en direction de la cavité secondaire 134.

La tige de piston 121 est ici pourvue d'une surface externe filetée 178.

Le corps 102 comporte en outre un flasque 171 fixé dans le corps 102 et configuré pour séparer la chambre de pression de frein de service 113 et la cavité secondaire 134. Ce flasque 171 est appliqué contre le deuxième côté 132 du piston de freinage 108.

Le corps 102 comporte en outre une bague annulaire d'étanchéité 170 disposée dans un orifice annulaire 179 du flasque 171 et au travers de laquelle la tige de piston 121 peut se déplacer en translation. Cette bague annulaire d'étanchéité 170 est appliquée contre le deuxième côté 132 du piston de freinage 108.

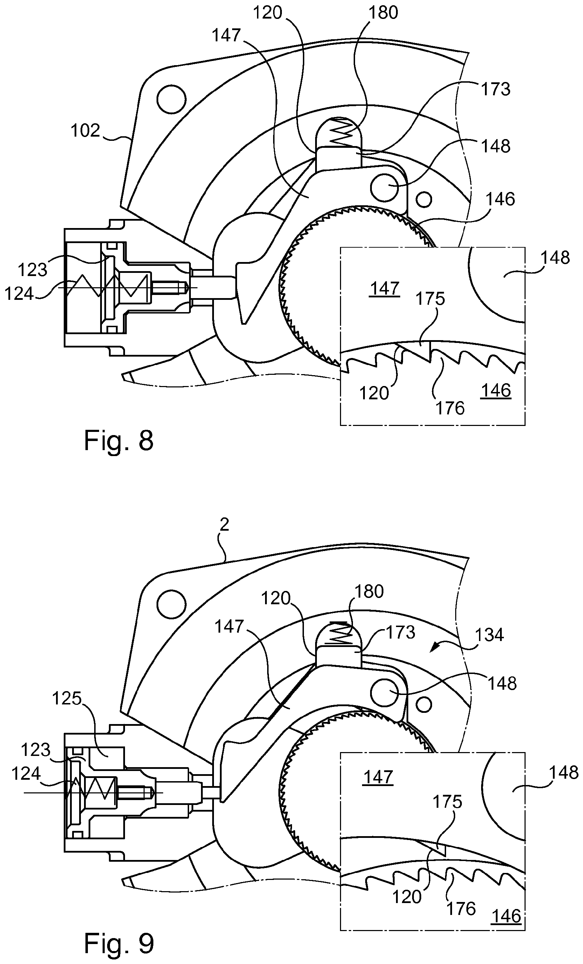

Le frein de parking comporte ici un piston de maintien 123 et un élément ressort 124 (figures 8 et 9) disposés dans la cavité latérale cylindrique dans laquelle est ménagée la chambre de pression de frein de parking 125. On observera que le piston de maintien 123 débouche dans la cavité secondaire 134. L'élément ressort 124 est configuré pour agir sur ce piston de maintien 123.

Le frein de parking comporte en outre un levier intermédiaire de commande 147 disposé dans la cavité secondaire 134, fixé d'une part au piston de maintien 123 par une encoche d'extrémité 149 et d'autre part au corps 102 par une liaison pivot 148 configurée pour permettre le déplacement en rotation du levier intermédiaire de commande 147 en réponse au déplacement en translation du piston de maintien 123.

L'ensemble comportant l'élément ressort 124, le piston de maintien 123 et le levier intermédiaire de commande 147 forme le dispositif de commande.

Le frein de parking 7 comporte un doigt de blocage 120 disposé dans la cavité secondaire 134 du corps 102.

Ce doigt de blocage 120, aussi appelé loquet de blocage, présente à une extrémité distale une dent 175 ayant un bord droit et un bord incliné, ainsi qu'un rebord 173 ménagé à l'opposé de son extrémité distale et configuré pour coopérer avec le levier intermédiaire de commande 147 pour déplacer en translation (soulever/relâcher) le doigt de blocage 120 en réponse au déplacement en rotation de ce levier intermédiaire de commande 147, et par conséquent en réponse au déplacement en translation du piston de maintien 123.

Le frein de parking comporte en outre un ressort de rappel 180 logé entre le corps 102 et le doigt de blocage 120 dans la cavité secondaire 134. Ce ressort de rappel 180 est configuré pour agir sur le doigt de blocage 120 pour le maintenir dans sa seconde position lorsque la chambre de pression de frein de parking 125 est vidangée.

Le frein de parking comporte en outre une roue à rochet 146 montée sur la tige de piston 121. Cette roue à rochet 146 présente une surface interne filetée 176 configurée pour coopérer avec la surface externe filetée 178 de la tige de piston 121 pour permettre le déplacement en translation de la tige de piston 121 en même temps que la rotation de la roue à rochet 146. En d'autres termes, la translation de la tige de piston 121 entraîne la roue à rochet 146 en rotation.

La roue à rochet 146 présente en outre une surface externe sur laquelle est ménagée une denture 177 dont les dents présentent chacune un bord droit et un bord incliné agencés pour coopérer avec les bords de la dent 175 du doigt de blocage 120.

On notera que le frein de parking comporte en outre une pièce de déverrouillage manuel (non représentée) configurée pour agir sur le piston de maintien 123 à l'encontre de l'élément ressort 124 afin de relever le doigt de blocage 120 et ainsi laisser la roue à rochet 146 libre en rotation.

Sur la figure 8, le système de freinage ferroviaire est dans sa configuration de verrouillage dans laquelle le doigt de blocage 120 immobilise la tige de piston 108 et par conséquent le piston de freinage 108 est dans sa deuxième position dite position de freinage de service.

La chambre de pression de frein de service 113 est sous pression tandis que la chambre de pression de frein de parking 125 est vidangée.

La vidange de la chambre de pression de frein de de parking 125 libère l'élément ressort 124, qui déplace le piston de maintien 123 de sa première position vers une deuxième position dite position stable et ainsi déplace le levier intermédiaire de commande 147 vers la roue à rochet 146 (vers le bas).

Le doigt de blocage 120 est ainsi libéré du levier 147, le ressort de rappel 180 se détend et déplace ce doigt de blocage 120 de sa première position vers sa deuxième position dans laquelle de la roue à rochet 146 immobiliser la roue à rochet 146 (c'est-à-dire ici interdire la rotation dans un sens). La dent 175 du doigt de blocage 120 vient coopérer avec une dent de la denture 176 de la roue à rochet 146.

L'immobilisation de la roue à rochet 146 permet de bloquer le déplacement de la tige de piston 121 dans une direction inverse à la direction de freinage. En d'autres termes, la roue à rochet empêche la tige de piston de reculer en direction de la cavité secondaire 134 à l'opposé de la chambre de pression de frein de service 113.

Dans cette configuration de verrouillage du frein de service, le frein de parking et le frein de service sont chacun dans une configuration de travail.

La chambre de pression de frein de service 113 peut ensuite être vidangée pour amener le frein de service en configuration de repos, le piston de freinage 108 étant bloqué dans sa deuxième position.

Sur la figure 9, le système de freinage ferroviaire est dans sa configuration de déverrouillage et/ou de réarmement dans laquelle le doigt de blocage 120 et le reste du dispositif de blocage n'immobilise pas la tige de piston 121 et par conséquent le piston de freinage 108 revient dans sa première position dite position de repos si la chambre de pression de frein de service 113 n'est pas sous pression.

Dans la configuration de réarmement et/ou de déverrouillage, la chambre de pression de frein de service 113 n'est pas alimentée (elle est vidangée) de sorte que le piston de freinage 108 est dans une position de repos.

Dans la configuration de réarmement, la chambre de pression de frein de parking 125 est sous pression de sorte que le piston de maintien 123 se trouve dans sa première position dans laquelle l'élément ressort 124 est comprimé, le levier intermédiaire d'actionnement 147 en position haute et le doigt de blocage 120 dans sa première position à distance de la roue à rochet 146.

Dans la configuration de déverrouillage, un effort a été appliqué sur la pièce de déverrouillage du frein de parking de sorte à tirer cette pièce déverrouillage vers l'extérieur du corps.

Le déplacement de cette pièce de déverrouillage entraine le piston de maintien 123 et par conséquent le levier 147, qui vient au contact du rebord 173 du doigt de blocage 120 pour le soulever à l'encontre du ressort de rappel 180 et ainsi l'amener à distance de la roue à rochet. Quand le doigt de blocage 20 atteint sa deuxième position, ce dernier ne coopère plus avec la roue à rochet 146, qui est ainsi libre (tout comme la tige de piston 121).

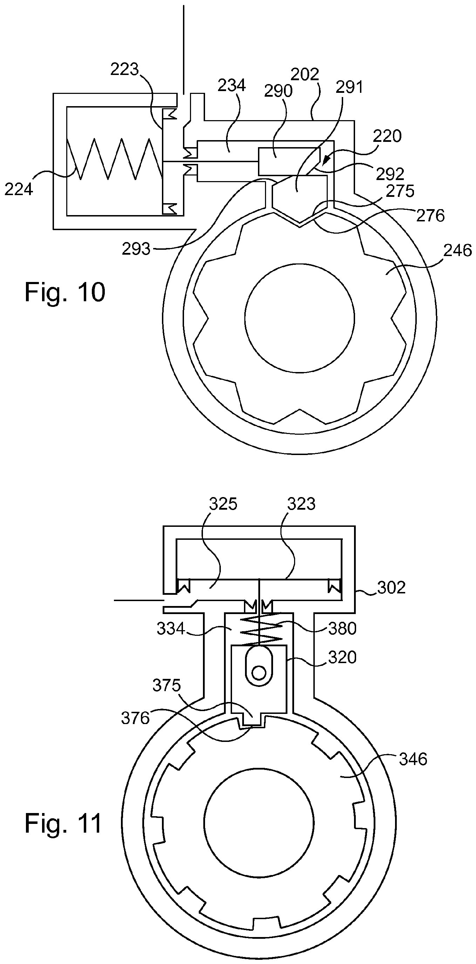

La figure 10 illustre schématiquement et partiellement une autre variante de réalisation du système de freinage ferroviaire illustré sur les figures 1 à 5 et de celui illustré sur les figures 6 à 9.

D'une manière générale on a employé pour les éléments similaires les mêmes références mais additionnées du nombre 200 par rapport au système illustré sur les figures 1 à 5 et additionnées du nombre 100 par rapport au système illustré sur les figures 6 à 9.

Le frein de service présente ici une roue à rochet 246 sur la tige de piston. Cette roue à rochet 246 présente sur sa surface externe une denture 276 ayant des dents à bords opposés inclinés.

Le frein de parking comporte ici un piston de maintien 223 disposé dans la chambre de pression de frein de parking 225 et un élément ressort 224 disposé aussi dans cette chambre 225.

Le frein de parking comporte en outre un dispositif de blocage 220 formé ici de deux pièces, respectivement une pièce de poussée 290 disposée dans la cavité secondaire 234 et fixée au piston de maintien 223 et une pièce de butée 291 libre dans la cavité secondaire 234.

La pièce de poussée 290 et la pièce de butée 291 présentent chacune un bord d'attaque respectif 292, 293 tandis que la pièce de butée 291 présente, à son extrémité distale opposée au bord d'attaque 293, une dent à bords opposés inclinés 275 et configurée pour être complémentaire de la denture 276 de la roue à rochet 246.

Sur la figure 10, le système de freinage ferroviaire est dans sa configuration de verrouillage.

La chambre de pression de frein de parking 225 est vidangée et l'élément ressort 224 se détend et déplace le piston de maintien 223 qui pousse selon une première direction la pièce de poussée 290 pour que cette dernière vienne en appui par son bord d'attaque 292 contre le bord d'attaque 293 de la pièce de butée 291. La pièce de butée 291 est alors déplacée selon une deuxième direction perpendiculaire à la première direction jusqu'à ce que sa dent 275 engrène avec une dent de la denture 276 de la roue à rochet 246 pour immobiliser cette dernière.

On notera que dès lors que la chambre de pression de frein de parking 225 est alimentée et sous pression, le piston de maintien 223 se déplace à l'encontre de l'élément ressort 224 et entraîne la pièce de poussée 290 jusqu'à libérer la pièce de butée 291 qui n'engrène plus avec la roue à rochet 246, laquelle est libre en rotation.

La figure 11 illustre schématiquement et partiellement une autre variante de réalisation du système de freinage ferroviaire illustré sur les figures 1 à 5, de celui illustré sur les figures 6 à 9 et de celui illustré sur la figure 10.

D'une manière générale on a employé pour les éléments similaires les mêmes références mais additionnées du nombre 300 par rapport au système illustré sur les figures 1 à 5, additionnées du nombre 200 par rapport au système illustré sur les figures 6 à 9 et additionnées du nombre 100 par rapport au système illustré sur la figure 10.

Le frein de service est pourvu d'une roue à rochet 346 sur sa tige de piston. Cette roue à rochet 346 présente sur sa surface externe une denture 376 ayant des dents à bords opposés droits.

Le frein de parking comporte ici un piston de maintien 323 disposé dans la chambre de pression de frein de parking 225 et est dépourvu d'élément ressort dans cette chambre.

Le frein de parking comporte un autre élément ressort, appelé aussi ressort de rappel 380, disposé dans la cavité secondaire 334 et configuré pour agir directement sur le doigt de blocage 320.

Ce doigt de blocage 320 est pourvu à son extrémité distale d'une dent 375 dont les bords opposés sont droits pour être complémentaire de la denture 376 de la roue à rochet 346.

On observera que piston de maintien 323 est ici directement relié au doigt de blocage 320, sans levier intermédiaire de commande.

Sur la figure 11, le système de freinage ferroviaire est dans sa configuration de verrouillage.

Ainsi, le doigt de blocage 320 immobilise la roue à rochet 346. On notera que du fait de la forme de la dent 375 du doigt de blocage 320 et de la denture 376 de la roue à rochet 346, cette dernière est bloquée en rotation dans les deux sens de rotation.

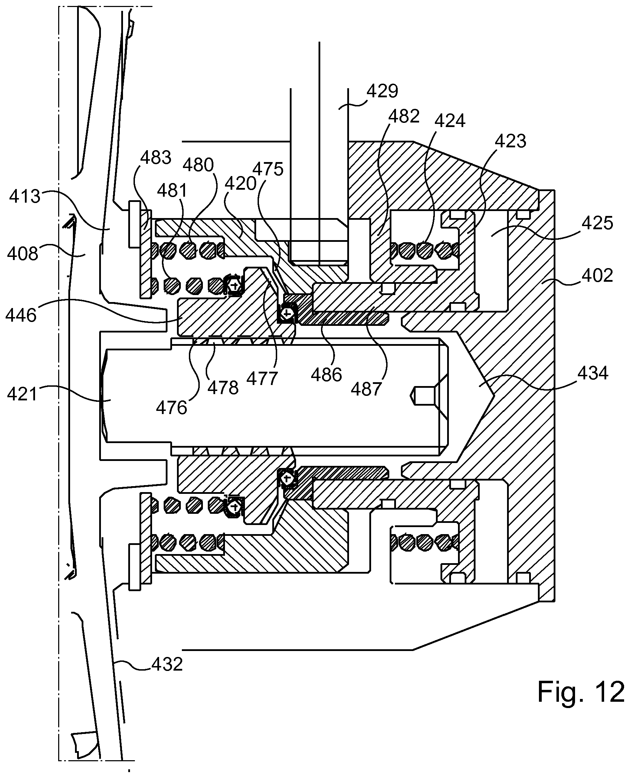

Les figures 12 à 15 représentent schématiquement et partiellement une autre variante de réalisation du système de freinage ferroviaire illustré sur les figures 1 à 5, et de ceux illustrés sur les figures 6 à 9, 10 et 11.

D'une manière générale on a employé pour les éléments similaires les mêmes références mais additionnées du nombre 400 par rapport au système illustré sur les figures 1 à 5, additionnées du nombre 300 par rapport au système illustré sur les figures 6 à 9, additionnées du nombre 200 par rapport au système illustré sur la figure 10 et additionnées du nombre 100 par rapport au système illustré sur la figure 11.

Le corps 402 présente ici la forme d'une enveloppe globalement parallélépipédique et fermée, pourvue d'une cavité centrale divisée en deux espaces formant respectivement la chambre de pression de frein de service 413 et une cavité secondaire 434, et d'une cavité latérale où est formée la chambre de pression de frein de parking 425.

Le frein de service comporte ici un piston de frein de service 408 mobile par rapport au corps 402 et une tige de piston 421 qui saille du second côté 432 du piston 408 en direction de la cavité secondaire 434.

La tige de piston 421 est ici pourvue d'une surface externe filetée 478.

Le frein de parking comporte ici un piston de maintien 423 et un premier élément ressort 424 disposés dans la cavité latérale dans laquelle est ménagée la chambre de pression de frein de parking 425. On observera que le piston de maintien 423 débouche dans la cavité secondaire 434. Le premier élément ressort 424 est en appui contre une patte interne 482 ménagée dans le corps 402 et est configuré pour agir sur ce piston de maintien 423.

Le piston de maintien 423 comporte une extension 487 s'étendant dans la cavité secondaire 434 jusqu'à venir en contact à la fois avec un dispositif intermédiaire 486 et avec une pièce de blocage 420.

On notera que l'ensemble comportant le premier élément ressort 424 et le piston de maintien 423 forme le dispositif de commande.

Le frein de parking comporte en outre un deuxième élément ressort 480 qui est en appui contre une butée interne 483 ménagée dans le corps 402 et est configuré pour agir sur cette pièce de blocage 420.

Cette pièce de blocage 420 est pourvue d'une paroi inclinée sur laquelle est ménagée une denture 175 ayant des dents avec au moins un bord incliné.

On notera que le deuxième élément ressort 480 est configuré pour agir sur la pièce de blocage 420 pour la maintenir dans sa seconde position lorsque la chambre de pression de frein de service 425 est vidangée.

Le frein de parking comporte en outre une roue à rochet 446 montée sur la tige de piston 421. Cette roue à rochet 446 présente une surface interne filetée 476 configurée pour coopérer avec la surface externe filetée 478 de la tige de piston 421 pour permettre le déplacement en translation de la tige de piston 421 en même temps que la rotation de la roue à rochet 446.

La roue à rochet 446 présente en outre une surface externe sur laquelle est ménagée une denture 477 dont les dents présentent chacune au moins un bord incliné agencé pour coopérer avec la denture 475 de la pièce de blocage 420.

Le frein de parking comporte en outre un troisième élément ressort 481 qui est en appui contre la butée interne 483 et est configuré pour agir sur la roue à rochet 446.

On notera que le frein de parking comporte en outre une pièce de déverrouillage manuel 429 configurée pour agir sur la pièce de blocage 420 et ainsi laisser la roue à rochet 446 libre en rotation.

Sur la figure 12, le système est dans sa configuration de réarmement.

Dans cette configuration de réarmement, la chambre de pression de frein de service 413 n'est pas alimentée (elle est vidangée) de sorte que le piston de freinage 408 est dans sa position de repos.

La chambre de pression de frein de parking 425 est quant à elle alimentée et sous pression de sorte que le piston de maintien 423 se trouve dans une première position dans laquelle le premier élément ressort 424 est comprimé et la pièce de blocage 420 est dans une première position où sa paroi inclinée pourvue de la denture 175 est à distance de la roue à rochet 446 et en particulier de sa denture externe 477. Les deuxième et troisième éléments ressorts 480 et 481 sont ici comprimés.

Dans cette configuration de réarmement du système, le frein de parking est dans une configuration réarmée tandis que le frein de service est dans une configuration de repos.

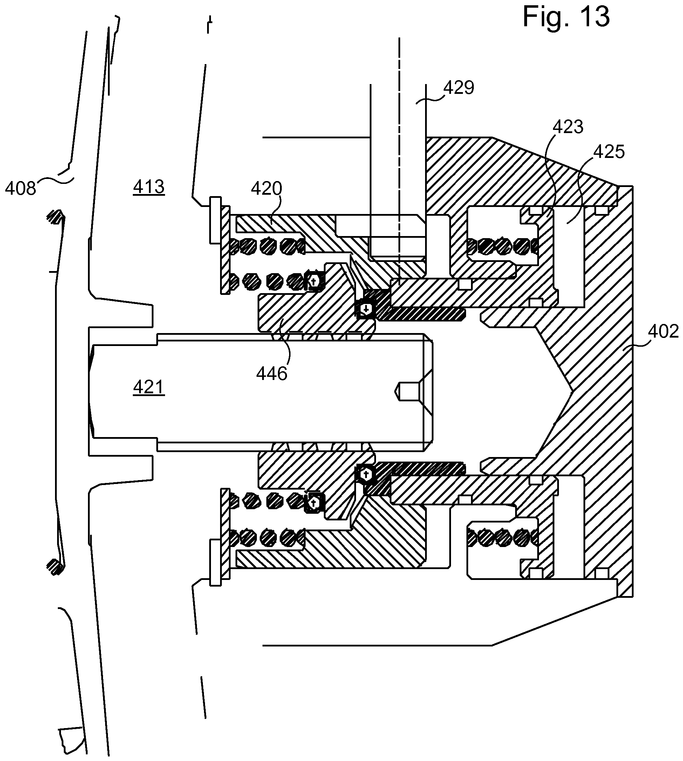

Sur la figure 13, le système est représenté dans sa configuration d'application du frein de service.

Dans cette configuration d'application du frein de service, la chambre de pression de frein de service 413 est alimentée et sous pression et le piston de freinage 408 a été déplacé de sa première position vers une deuxième position dite position de freinage de service.

On notera que la tige de piston 421 s'est déplacée en translation au travers de la roue à rochet 446 en générant la rotation de cette dernière, qui est libre en rotation.

On notera également que dans cette configuration illustrée sur la figure 13, la chambre de pression de frein de parking 425 est toujours sous pression comme mentionné en référence à la figure 12.

Dans cette configuration d'application du frein de service du système, le frein de parking est donc toujours dans sa configuration réarmée tandis que le frein de service est dans une configuration de travail.

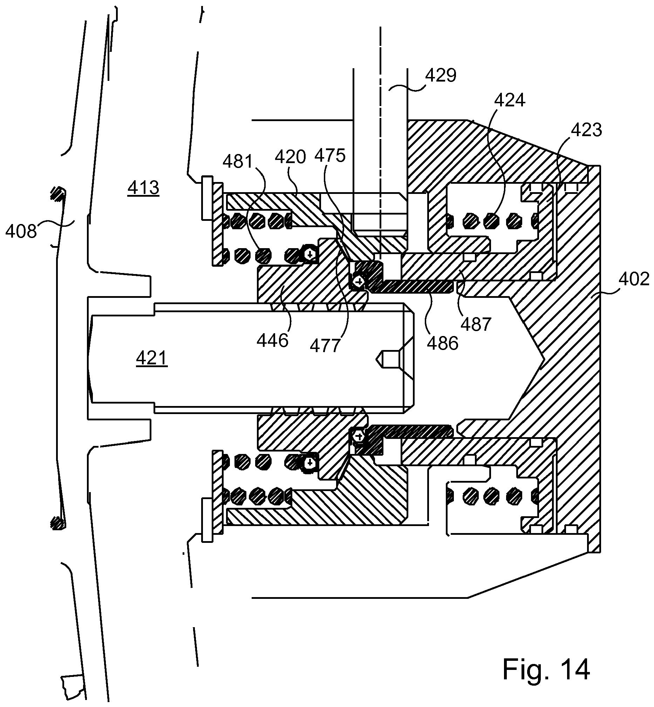

Sur la figure 14, le système est représenté dans une configuration de verrouillage dans laquelle le piston de freinage 408 du frein de service est immobilisé dans sa deuxième position illustrée sur la figure 13.

La chambre de pression de frein de service 413 est toujours sous pression tandis que la chambre de pression de frein de parking 425 est vidangée.

La vidange de la chambre de pression de frein de parking 425 libère le premier élément ressort 424, qui déplace le piston de maintien 423 de sa première position vers une deuxième position dite position stable.

Ainsi, l'extension 487 du piston de maintien 423 n'est plus en appui contre le dispositif intermédiaire 486, lequel est alors libre en translation.

Le troisième élément ressort 481 se détend et entraîne la roue à rochet 446 en rotation pour la déplacer vers l'extension 487 jusqu'à venir en butée contre la denture 475 de la pièce de blocage 420 avec laquelle la denture 477 de cette roue à rochet 446 coopère.

Le dispositif intermédiaire 486 est quant à lui poussé en translation par la roue à rochet 446 vers l'extension 487.

La roue à rochet 446 vient donc s'immobiliser contre la pièce de blocage 420 et par conséquent, la tige de piston 421 est elle aussi immobilisée en translation.

Dans cette configuration de verrouillage du frein de service, le frein de parking et le frein de service sont chacun dans une configuration de travail.

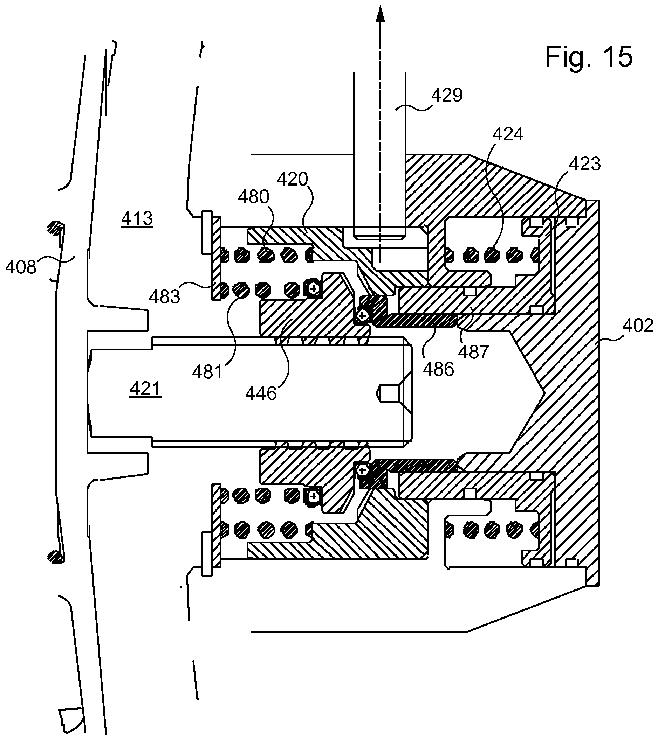

Sur la figure 15, le système est représenté dans une configuration de vidange du frein de service et de déverrouillage.

La vidange de la chambre de pression de frein de service 413 s'effectue par l'intermédiaire des fuites dans le réseau, ou en variante de manière volontaire.

On notera que grâce au frein de parking et en particulier à l'ensemble pièce de blocage 420 - roue à rochet 446 - piston de maintien 423 - élément ressort 424, en combinaison avec la tige de piston 421 fixée au piston de freinage 408 du frein de service, ce piston de freinage 408 reste dans sa deuxième position, malgré la vidange de la chambre de pression de frein de service 413.

Dans cette configuration de vidange du frein de service, le frein de parking est dans une configuration de travail tandis que le frein de service est bloqué dans sa configuration de travail.

Dans la configuration de déverrouillage, un effort a été appliqué sur la pièce de déverrouillage 429 du frein de parking de sorte à tirer cette pièce de déverrouillage 429 vers l'extérieur du corps 402.

Le déplacement de cette pièce de déverrouillage 429 entraine le déblocage de la pièce de blocage 420 et le deuxième élément ressort 480 se détend et déplace en translation le dispositif de blocage 420 vers sa deuxième position.

Lorsque la pièce de blocage 420 atteint sa deuxième position, ce dernier ne coopère plus avec la roue à rochet 446, laquelle est alors libre en rotation. Par conséquent, la tige de piston 421 est à nouveau libre en translation.

Dans cette configuration de déverrouillage, le frein de parking est dans une configuration de déverrouillage tandis que le frein de service est dans une configuration de repos.

Dans une variante non illustrée, le distributeur n'est pas commandé pneumatiquement mais plutôt électriquement ou de manière hydraulique ; et/ou il comporte en outre une valve de seuil configurée pour contrôler et commander le passage du tiroir du distributeur d'un premier état de ce dernier à un second état. Ici, le premier état correspond à la première position du tiroir et le deuxième état correspond à la deuxième position du tiroir.

La valve de seuil est ainsi configurée pour faire passer le tiroir de sa première position à sa deuxième position lorsque la valeur de pression du fluide sous pression dans la chambre de pression du frein de parking est inférieure à une valeur de seuil de pression prédéterminé. En effet, le déclenchement de la valve de seuil permet la vidange de la chambre de pression du frein de parking et ainsi le passage de ce dernier en configuration de travail pour bloquer le piston de freinage du frein de service.

On notera que l'on détecte ici une chute de pression dans la chambre de pression du frein de parking car on considère qu'une telle chute de pression est significative d'une chute de pression dans la chambre de pression du frein de service. En effet, s'il y a des fuites au niveau de la chambre de pression du frein de parking, il y en a aussi dans la chambre de pression du frein de service.

L'utilisation d'une telle valve de seuil est particulièrement avantageuse car, après l'application du frein de service (comme décrit en référence à la figure 2) des fuites pourraient lentement vidanger la chambre de pression de frein de service et la chambre de pression du frein de parking, sans que le frein de parking ne soit appliqué.

Ainsi, la valve de seuil permet d'éviter cette situation puisque le basculement du tiroir permet l'application du frein de parking dès lors que la pression du fluide dans la chambre de pression de frein de parking est inférieure à la valeur de seuil de pression prédéterminé (et donc dès lors que la pression du fluide dans la chambre de pression de frein de service a baissé significativement).

On observera que l'actionneur du distributeur est dans ce cas connecté à la conduite de frein secondaire par l'intermédiaire d'une conduite de commande, pour le déplacement du tiroir au déclenchement de la valve de seuil.

Dans d'autres variantes non illustrées :
- dans la configuration de réarmement du système de freinage ferroviaire, l'opération de réarmer est effectuée de manière électrique ou mécanique ou encore hydraulique plutôt que pneumatique ;
- dans la configuration de déverrouillage du système de freinage ferroviaire, la pièce de déverrouillage est maintenue dans une position de déverrouillage du frein de parking par un verrou pneumatique ou électrique ou encore mécanique ;
- dans la configuration de déverrouillage du système de freinage ferroviaire, la commande de déverrouillage est effectuée de manière manuelle par l'utilisation d'au moins un câble, ou de manière pneumatique ou électrique ou encore hydraulique ;

- la configuration de déverrouillage du système de freinage ferroviaire est obtenue en alimentant la chambre de pression de frein de parking, comme pour la configuration de réarmement plutôt que par l'actionnement d'une pièce de déverrouillage ;
- la chambre de pression de frein de service peut être vidangée volontairement plutôt que par les fuites du système ;
- les dispositifs de blocage et roues à rochet et/ou tiges de piston des systèmes illustrés sur les figures 1 à 5 et 6 à 9 peuvent présenter des dentures comme celles illustrées sur les dispositifs de blocage et roues à rochet illustrés sur les figures 10 et 11 ;
- dans la configuration de verrouillage, l'actionnement du dispositif de blocage peut être effectué par un actionneur électrique plutôt que par la mise sous pression d'une chambre de pression alimentée via un distributeur ;
- le système de freinage ferroviaire est dépourvu d'un régulateur entre le réservoir auxiliaire et la chambre de pression de frein de service et/ou est dépourvu d'un réservoir auxiliaire et/ou les première et deuxième sources d'agent de pression pneumatique sont totalement distinctes plutôt que de venir d'une même conduite principale ;
- le système de freinage ferroviaire comporte un frein de service dépourvu de pièce de coin attachée au piston de freinage, de sorte que ce piston agit directement sur la tige de poussée, lequel agit sur les leviers déformables ; et dans ce cas, le piston de freinage ensemble avec sa tige crantée et la tige de poussée sont mobiles dans la deuxième direction axiale tandis que le frein de parking est configuré de sorte que le doigt de blocage et le piston de maintien sont mobiles dans la première direction axiale ;
- le système de freinage ferroviaire présente une timonerie de freinage différente de celle illustrée sur les figures, en particulier, la timonerie de freinage comporte une semelle configurée pour agir directement sur une roue du véhicule ferroviaire, cette semelle étant directement articulée par une articulation du type pivot fixée à la tige de poussée, un levier rigide fixé au corps du système ainsi qu'un levier déformable fixé à la fois au levier rigide et à l'articulation sur la semelle ; et/ou
- le système de freinage ferroviaire comporte une timonerie de freinage configurée pour agir sur un frein à semelles comme décrit ci-dessus et est pourvu d'un frein de service avec ou sans pièce de coin attachée au piston de freinage.

On rappelle plus généralement que l'invention ne se limite pas aux exemples décrits et représentés.

## Revendications

1. Système de freinage ferroviaire pour véhicule ferroviaire à freins à au moins une garniture ou à au moins une semelle (5), comportant :
- un corps (2 ; 102 ; 202 ; 302 ; 402) ;
- une timonerie de freinage (4) configurée pour agir sur au moins un dit frein à au moins une garniture ou à au moins une semelle (5) ;
- un frein de service (6) comportant un piston de freinage (8 ; 108 ; 408) mobile par rapport audit corps pour agir sur ladite timonerie de freinage (4) et délimitant avec ledit corps une chambre de pression de frein de service (13 ; 113 ; 413) configurée pour être alimentée par une première source d'agent de pression pneumatique (50, 51, 53) pour mettre ledit piston de freinage dans une position de freinage de service ; et
- un frein de parking (7) configuré pour agir sur ledit piston de freinage dudit frein de service et admettant une configuration de travail et une configuration de repos ;
ledit système de freinage ferroviaire (1) étant **caractérisé en ce que** :
- ledit piston de freinage est disposé dans ledit corps et présente deux côtés, respectivement un premier côté (17 ; 117) configuré pour agir sur ladite timonerie de freinage (4) et un second côté (18 ; 118) opposé audit premier côté et tourné vers la dite chambre de pression de frein de service ;
- ledit frein de service comporte en outre une tige de piston (21 ; 121 ; 221 ; 321 ; 421) disposée dans ladite chambre de pression de frein de service et fixée sur ledit second côté dudit piston de freinage ;
- ledit frein de parking est disposé dans ledit corps et comporte un dispositif de blocage (20 ; 120 ; 220 ; 320 ; 420) disposé dans ladite chambre de pression de frein de service, mobile par rapport audit corps pour agir sur ladite tige de piston et admettant une première position et une seconde position, ainsi qu'un dispositif de commande mobile par rapport audit corps, configuré pour être actionné électriquement et admettant une position stable ;
avec ledit dispositif de blocage et ledit dispositif de commande qui sont configurés pour que :
- lorsque ledit piston de freinage est dans sa position de freinage de service et que ledit frein de parking est en configuration de travail, ledit dispositif de commande agit sur ledit dispositif de blocage jusqu'à ce que ce dernier immobilise ladite tige de piston de sorte à bloquer ledit piston de freinage dans sa position de freinage de service, ledit dispositif de blocage étant alors dans sa seconde position et ledit dispositif de commande dans sa positon stable ; et
- lorsque ledit frein de parking est en configuration de repos, ledit dispositif de commande agit sur ledit dispositif de blocage jusqu'à ce que ce dernier libère ladite tige de piston de sorte à débloquer ledit piston de freinage de sa position de freinage de service, ledit dispositif de blocage étant ainsi dans sa première position ;
grâce à quoi l'effort de freinage appliqué sur ladite timonerie de freinage lorsque ledit frein de parking est en configuration de travail est directement fonction de l'effort de freinage appliqué sur ladite timonerie de freinage par ledit frein de service dans sa position de freinage de service, indépendamment de l'effort appliqué par ledit dispositif de blocage sur ladite tige de piston.

2. Système selon la revendication 1, **caractérisé en ce que** ledit dispositif de commande est formé par un actionneur électrique.

3. Système selon la revendication 1, caractérisé en ce ledit dispositif de blocage (120 ; 220 ; 320 ; 420) est disposé dans une cavité (134 ; 234 ; 334 ; 434) dudit corps (102 ; 202 ; 302 ; 402).

4. Système selon l'une quelconque des revendications 1 à 3, **caractérisé en ce que** ledit dispositif de blocage est formé par un doigt de blocage (20 ; 120 ; 220 ; 320 ; 420) et ledit dispositif de commande est formé par un actionneur électrique mobile par rapport audit corps et par un élément ressort (24 ; 124, 180 ; 280 ; 380 ; 424) ; avec ledit actionneur électrique qui est configuré pour maintenir ledit doigt de blocage dans sa première position lorsque ledit actionneur électrique est alimenté électriquement, première position dans laquelle ledit doigt de blocage est à distance de ladite tige de piston ; et avec ledit élément ressort qui est configuré pour maintenir ledit doigt de blocage dans sa seconde position lorsque ledit actionneur électrique n'est pas alimenté électriquement, deuxième position dans laquelle ledit doigt de blocage immobilise ladite tige de piston.

5. Système selon l'une quelconque des revendications 1 à 3, **caractérisé en ce que** ledit dispositif de blocage est formé par un doigt de blocage (20 ; 120 ; 220 ; 320 ; 420) et ledit dispositif de commande est formé par un actionneur électrique mobile par rapport audit corps ; ledit actionneur étant configuré pour maintenir ledit doigt de blocage dans sa première position lorsque ledit actionneur électrique est alimenté électriquement, première position dans laquelle ledit doigt de blocage est à distance de ladite tige de piston ; ledit actionneur étant en outre configuré pour maintenir ledit doigt de blocage dans sa seconde position lorsque ledit actionneur électrique n'est pas alimenté électriquement, deuxième position dans laquelle ledit doigt de blocage immobilise ladite tige de piston.

6. Système selon la revendication 4, **caractérisé en ce que** ledit élément ressort (180 ; 280 ; 380) est disposé dans une cavité (134 ; 234 ; 334) dudit corps (102 ; 202 ; 302).

7. Système selon l'une quelconque des revendications 1 à 6, **caractérisé en ce que** ledit frein de parking comporte en outre un levier intermédiaire de commande (147 ; 247) attaché à la fois audit dispositif de blocage (120 ; 220) et audit dispositif de commande et configuré pour actionner ledit dispositif de blocage en réponse au déplacement dudit dispositif de commande.

8. Système selon l'une quelconque des revendications 1 à 7, **caractérisé en ce que** ledit dispositif de blocage (20 ; 120 ; 220) présente à son extrémité distale une dent à au moins un bord incliné (175 ; 275) configurée pour coopérer de manière complémentaire avec une denture complémentaire à au moins un bord incliné (76 ; 176 ; 276 ; 476) de ladite tige de piston (21 ; 221) ou d'une pièce intermédiaire (146 ; 446) disposée entre ladite tige de piston (21 ; 221) et ledit dispositif de blocage (20 ; 120 ; 220).

9. Système selon l'une quelconque des revendications 1 à 7, **caractérisé en ce que** ledit dispositif de blocage (320) présente à son extrémité distale une dent à bords droits (375) configurée pour coopérer de manière complémentaire avec une denture complémentaire à bords droits (376) de ladite tige de piston ou d'une pièce intermédiaire (346) disposée entre ladite tige de piston et ledit dispositif de blocage (320).

10. Système selon l'une quelconque des revendications 1 à 9, **caractérisé en ce que** ledit frein de service comporte en outre une roue à rochet (146 ; 246 ; 346 ; 446) montée sur ladite tige de piston (121 ; 421) et configurée pour engrener avec ledit dispositif de blocage (120 ; 220 ; 320 ; 420) lorsque ce dernier est dans sa seconde position, afin d'immobiliser ladite tige de piston.

11. Système selon l'une quelconque des revendications 1 à 10, **caractérisé en ce que** ledit frein de parking (7) comporte en outre une pièce de déverrouillage (29 ; 429) manuel dudit frein de parking lorsque ce dernier est en configuration de travail, laquelle pièce de déverrouillage est configurée pour agir sur ledit dispositif de blocage (20 ; 420).

12. Système selon la revendication 11, **caractérisé en ce que** ladite pièce de déverrouillage est configurée pour être actionnée électriquement.

## Patentansprüche

1. Schienenbremssystem für Schienenfahrzeuge mit Bremsen mit wenigstens einem Bremsbelag oder mit wenigstens einer Bremsklotzsohle (5), umfassend:
- einen Körper (2; 102; 202; 302; 402);
- ein Bremsgestänge (4), das dazu ausgebildet ist, auf wenigstens eine der Bremsen mit wenigstens einem Bremsbelag oder mit wenigstens einer Bremsklotzsohle (5) einzuwirken;
- eine Betriebsbremse (6) mit einem Bremskolben (8; 108; 408), der in Bezug auf den Körper beweglich ist, um auf das Bremsgestänge (4) einzuwirken, und mit dem Körper einen Betriebsbremsendruckraum (13; 113; 413) umgrenzt, der dazu ausgebildet ist, durch eine erste pneumatische Druckmittelquelle (50, 51, 53) gefüllt zu werden, um den Bremskolben in eine Betriebsbremsstellung zu bringen; und
- eine Feststellbremse (7), die dazu ausgebildet ist, auf den Bremskolben der Betriebsbremse einzuwirken, und die eine Arbeitskonfiguration und eine Ruhekonfiguration aufweist;
wobei das Schienenbremssystem (1) **dadurch gekennzeichnet ist, dass**
- der Bremskolben in dem Körper angeordnet ist und zwei Seiten aufweist, nämlich eine erste Seite (17; 117), die dazu ausgebildet ist, auf das Bremsgestänge (4) einzuwirken, und eine zweite Seite (18; 118), die der ersten Seite entgegengesetzt angeordnet und dem Betriebsbremsendruckraum zugewandt ist;
- die Betriebsbremse ferner eine Kolbenstange (21; 121; 221; 321; 421) umfasst, die in dem Betriebsbremsendruckraum angeordnet und an der zweiten Seite des Bremskolbens befestigt ist;
- die Feststellbremse in dem Körper angeordnet ist und eine Blockiervorrichtung (20; 120; 220; 320; 420) umfasst, die in dem Betriebsbremsendruckraum angeordnet ist, bezüglich des Körpers beweglich ist, um auf die Kolbenstange einzuwirken, und eine erste Stellung und eine zweite Stellung aufweist, sowie eine Betätigungsvorrichtung (23, 24; 123, 124, 180; 223, 280; 323, 380; 423, 424), die bezüglich des Körpers beweglich ist, die dazu ausgeführt ist, elektrisch betätigt zu werden und die eine stabile Stellung aufweist;
wobei die Blockiervorrichtung und die Betätigungsvorrichtung dazu ausgebildet sind, dass
- die Betätigungsvorrichtung, wenn der Bremskolben sich in seiner Betriebsbremsstellung befindet und die Feststellbremse sich in der Arbeitskonfiguration befindet, so lange auf die Blockiervorrichtung einwirkt, bis letztere die Kolbenstange solchermaßen blockiert, dass der Bremskolben in seiner Betriebsbremsstellung arretiert ist, wobei die Blockiervorrichtung sich dann in ihrer zweiten Stellung und die Betätigungsvorrichtung sich in ihrer stabilen Stellung befindet; und
- die Betätigungsvorrichtung, wenn die Feststellbremse sich in der Ruhestellung befindet, so lange auf die Blockiervorrichtung einwirkt, bis letztere die Kolbenstange solchermaßen freigibt, dass der Bremskolben aus seiner Bremsstellung gelöst wird, wobei die Blockiervorrichtung sich dann in ihrer ersten Stellung befindet;
wodurch die Bremskraft, die auf das Bremsgestänge ausgeübt wird, wenn die Feststellbremse sich in der Arbeitskonfiguration befindet, unmittelbar von der Bremskraft abhängt, die durch die Betriebsbremse in ihrer Betriebsbremsstellung auf das Bremsgestänge ausgeübt wird, unabhängig von der Kraft, die durch die Blockiervorrichtung auf die Kolbenstange ausgeübt wird.

2. System nach Anspruch 1,
**dadurch gekennzeichnet, dass** die Betätigungsvorrichtung durch einen elektrischen Steller gebildet ist.

3. System nach Anspruch 1,
**dadurch gekennzeichnet, dass** die Blockiervorrichtung (120; 220; 320; 420) in einer Höhlung (134; 234; 334; 434) des Körpers (102; 202; 302; 402) angeordnet ist.

4. System nach einem der Ansprüche 1 bis 3,
**dadurch gekennzeichnet, dass** die Blockiervorrichtung von einem Blockierzapfen (20; 120; 220; 320; 420) gebildet ist und die Betätigungsvorrichtung von einem elektrischen Steller, der bezüglich des Körpers beweglich ist und einem Federelement (24; 124, 180; 280; 380; 424) gebildet ist; wobei der elektrische Steller dazu ausgebildet ist, den Blockierzapfen, wenn der elektrische Steller bestromt ist, in seiner ersten Stellung zu halten, in der der Blockierzapfen von der Kolbenstange beabstandet ist; und wobei das Federelement dazu ausgebildet ist, den Blockierzapfen, wenn der elektrische Steller nicht bestromt ist, in seiner zweiten Stellung zu halten, in der der Blockierzapfen die Kolbenstange blockiert.

5. System nach einem der Ansprüche 1 bis 3,
**dadurch gekennzeichnet, dass** die Blockiervorrichtung von einem Blockierzapfen (20; 120; 220; 320; 420) gebildet ist und die Betätigungsvorrichtung von einem bezüglich des Körpers beweglichen elektrischen Steller gebildet ist, wobei der Steller dazu ausgebildet ist, den Blockierzapfen, wenn der elektrische Steller bestromt ist, in seiner ersten Stellung zu halten, in der der Blockierzapfen von der Kolbenstange beabstandet ist, und wobei der Steller ferner dazu ausgebildet ist, den Blockierzapfen, wenn der elektrische Steller nicht bestromt ist, in seiner zweiten Stellung zu halten, in der der Blockierzapfen die Kolbenstange blockiert.

6. System nach Anspruch 4,
**dadurch gekennzeichnet, dass** das Federelement (180; 280; 380) in einer Höhlung (134; 234; 334) des Körpers (102; 202; 302) angeordnet ist.

7. System nach einem der Ansprüche 1 bis 6,
**dadurch gekennzeichnet, dass** die Feststellbremse ferner einen Betätigungszwischenhebel (147; 247) umfasst, der sowohl an der Blockiervorrichtung (120; 220) als auch an der Betätigungsvorrichtung (123; 223) befestigt und dazu ausgebildet ist, die Blockiervorrichtung in Antwort auf die Verschiebung der Betätigungsvorrichtung zu betätigen.

8. System nach einem der Ansprüche 1 bis 7,
**dadurch gekennzeichnet, dass** die Blockiervorrichtung (20; 120; 220) an ihrem distalen Ende einen Zahn mit wenigstens einem schrägen Rand (175; 275) aufweist, der dazu ausgebildet ist, mit einer komplementären Verzahnung mit wenigstens einem schrägen Rand (76; 176, 276; 476) der Kolbenstange (21; 221) oder eines zwischen der Kolbenstange (21; 221) und der Blockiervorrichtung (20; 120; 220) angeordneten Zwischenstücks (146; 446) in komplementärer Weise zusammenzuwirken.

9. System nach einem der Ansprüche 1 bis 7,
**dadurch gekennzeichnet, dass** die Blockiervorrichtung (320) an ihrem distalen Ende einen Zahn mit geraden Rändern (375) aufweist, der dazu ausgebildet ist, mit einer komplementären Verzahnung mit geraden Rändern (376) der Kolbenstange oder eines zwischen der Kolbenstange und der Blockiervorrichtung (320) angeordneten Zwischenstücks (346) in komplementärer Weise zusammenzuwirken.

10. System nach einem der Ansprüche 1 bis 9,
**dadurch gekennzeichnet, dass** die Betriebsbremse ferner ein Sperrzahnrad (146; 246; 346; 446) umfasst, das auf der Kolbenstange (121; 421) befestigt und dazu ausgebildet ist, mit der Blockiervorrichtung (120; 220; 320; 420) in Eingriff zu gelangen, wenn letztere sich in ihrer zweiten Stellung befindet, um die Kolbenstange zu blockieren.

11. System nach einem der Ansprüche 1 bis 10,
**dadurch gekennzeichnet, dass** die Feststellbremse (7) ferner ein manuelles Entriegelungsteil (29; 429) der Feststellbremse aufweist, wenn letztere sich in der Arbeitskonfiguration befindet, wobei das Entriegelungsteil dazu ausgebildet ist, auf die Blockiervorrichtung (20; 420) einzuwirken.

12. System nach Anspruch 11, **dadurch gekennzeichnet, dass** das Entriegelungsteil dazu ausgebildet ist, elektrisch betätigt zu werden.

## Claims

1. A rail vehicle braking system with brakes that have at least one lining or at least one block (5), comprising:
- a body (2 ; 102 ; 202 ; 302 ; 402);
- a braking linkage (4) configured to act on at least one said brake that has at least one lining or at least one block (5);
- a service brake (6) comprising a braking piston (8 ; 108 ; 408) which is movable relative to said body to act on said braking linkage (4) and delimits with said body a service brake pressure chamber (13 ; 113 ; 413) configured to be supplied by a first source of pneumatic pressure agent (50, 51, 53) to put said braking piston into a service braking position; and
- a parking brake (7) configured to act on said braking piston of said service brake and having a working configuration and a resting configuration;
said rail vehicle braking system being (1) **characterized in that**:
- said braking piston is disposed in said body and has two sides, respectively a first side (17 ; 117) configured to act on said braking linkage (4) and a second side (18 ; 118) which is an opposite side to said first side and which is turned towards said service brake pressure chamber;
- said service brake further comprises a piston rod (21 ; 121 ; 221 ; 321 ; 421) disposed in said service brake pressure chamber and attached to said second side of said braking piston;
- said parking brake is disposed in said body and comprises a blocking device (20 ; 120 ; 220 ; 320 ; 420) disposed in said service brake pressure chamber, movable relative to said body to act on said piston rod and having a first position and a second position, as well as an actuating device movable relative to said body, configured to be electrically actuated and having a stable position;
said blocking device and said actuating device being configured such that:
- when said braking piston is in its service braking position and said parking brake is in working configuration, said actuating device acts on said blocking device until the latter immobilizes said piston rod so as to block said braking piston in its service braking position, said blocking device then being in its second position and said actuating device in its stable position; and
- when said parking brake is in resting configuration, said actuating device acts on said blocking device until the latter frees said piston rod so as to unblock said braking piston from its service braking position, said blocking device thus being in its first position;
whereby the braking force applied to said braking linkage when said parking brake is in working configuration is directly related to the braking force applied to said braking linkage by said service brake in its service braking position, independently of the force applied by said blocking device on said piston rod.

2. A system according to claim 1, **characterized in that** said actuating device is formed by an electrical actuator.

3. A system according to claim 1, **characterized in that** said blocking device (120 ; 220 ; 320 ; 420) is disposed in a cavity (134 ; 234 ; 334 ; 434) of said body (102 ; 202 ; 302 ; 402).

4. A system according to any one of claims 1 to 3, **characterized in that** said blocking device is formed by a blocking finger (20 ; 120 ; 220 ; 320 ; 420) and said actuating device is formed by an electrical actuator movable relative to said body and by a spring member (24 ; 124, 180 ; 280 ; 380 ; 424); said electrical actuator being configured to hold said blocking finger in its first position when said electrical actuator is electrically supplied, in which first position said blocking finger is away from said piston rod; said spring member being configured to hold said blocking finger in its second position when said electrical actuator is not electrically supplied, in which second position said blocking finger immobilizes said piston rod.

5. A system according to any one of claims 1 to 3, **characterized in that** said blocking device is formed by a blocking finger (20 ; 120 ; 220 ; 320 ; 420) and said actuating device is formed by an electrical actuator movable relative to said body; said actuator being configured to hold said blocking finger in its first position when said electrical actuator is electrically supplied, in which first position said blocking finger is away from said piston rod; said actuator being furthermore configured to hold said blocking finger in its second position when said electrical actuator is not electrically supplied, in which second position said blocking finger immobilizes said piston rod.

6. A system according to claim 4, **characterized in that** said spring member (180 ; 280 ; 380) is disposed in a cavity (134 ; 234 ; 334) of said body (102 ; 202 ; 302).

7. A system according to any one of claims 1 to 6, **characterized in that** said parking brake further comprises an intermediate actuating lever (147 ; 247) attached both to said blocking device (120 ; 220) and to said actuating device and configured to actuate said blocking device in response to the movement of said actuating device.

8. A system according to any one of claims 1 to 7, **characterized in that** said blocking device (20 ; 120 ; 220) has at its distal end a tooth having at least one inclined edge (175 ; 275) and configured to cooperate in complementary manner with a complementary teeth formation having at least one inclined edge (76 ; 176 ; 276 ; 476) of said piston rod (21 ; 221) or of an intermediate part (146 ; 446) disposed between said piston rod (21 ; 221) and said blocking device (20 ; 120 ; 220).

9. A system according to any one of claims 1 to 7, **characterized in that** said blocking device (320) has at its distal end a tooth having straight edges (375) and configured to cooperate in complementary manner with a complementary teeth formation having straight edges (376) of said piston rod or of an intermediate part (346) disposed between said piston rod and said blocking device (320).

10. A system according to any one of claims 1 to 9, **characterized in that** said service brake further comprises a ratchet wheel (146 ; 246 ; 346 ; 446) mounted on said piston rod (121 ; 421) and configured to mesh with said blocking device (120 ; 220 ; 320 ; 420) when the latter is in its second position, in order to immobilize said piston rod.

11. A system according to any one of claims 1 to 10, **characterized in that** said parking brake (7) further comprises a manual unlocking part (29 ; 429) for unlocking said parking brake when the latter is in working configuration, which unlocking part is configured to act on said blocking device (20 ; 420).

12. A system according to claim 11, **characterized in that** said unlocking part is configured to be locking actuated.
